# EUROPÄISCHE PATENTSCHRIFT

(11) **EP 3 371 011 B1**
(45) Veröffentlichungstag und Bekanntmachung des Hinweises auf die Patenterteilung: **12.12.2018**
(21) Anmeldenummer: 16762968.2
(22) Anmeldetag: 25.08.2016
(51) Int. Cl.: B60R 25/24, E05F 15/76

(54) **UNTERSTÜTZUNGSVORRICHTUNG FÜR EIN BELADEN EINES KRAFTFAHRZEUGS**
SYSTEM TO SUPPORT LOADING PARCELS INTO A VEHICLE
SYSTÈME POUR SUPPORTER LE CHARGEMENT DES PAQUETS DANS UN VÉHICULE

(30) Priorität: 04.11.2015 DE 102015014211
(43) Veröffentlichungstag der Anmeldung: 12.09.2018
(73) Patentinhaber: Audi AG, 85045 Ingolstadt (DE)
(72) Erfinder: NEUDECKER, Ansgar, 91171 Greding (DE)
(86) Internationale Anmeldenummer: PCT/EP2016/001432
(87) Internationale Veröffentlichungsnummer: WO 2017/076480

(56) Entgegenhaltungen:
- WO-A1-2013/134865
- WO-A1-2014/086763
- DE-A1-102011 111 600
- JP-A- 2005 315 024

## Beschreibung

Die Erfindung betritt eine Unterstützungsvorrichtung für ein Beladen eines Kraftfahrzeugs. Weiterhin betrifft die Erfindung ein Verfahren zum Betreiben einer Unterstützungsvorrichtung für ein Beladen eines Kraftfahrzeugs.

Aus der JP 2005 315024 ist eine Vorrichtung und Verfahren zur Unterstützung beim Beladen gemäß Oberbegriff des Anspruchs 1 bzw. Anspruchs 8 bekannt.

Aus der DE 10 2014 018 198 A1 ist ein Verfahren zur Unterstützung beim Beladen eines Fahrzeugs bekannt. Dabei werden die Abmessungen eines Ladeguts vor dem Beladen erfasst und in Abhängigkeit von diesen Abmessungen und fahrzeugtypspezifischer Daten einem Nutzer Informationen über die Verstaubarkeit des Ladeguts bei einer Vielzahl von verschiedenen, vorgegebenen Fahrzeugtypen ausgegeben.

Aus der DE 10 2014 010 471 A1 ist eine Laderaumabdeckungsanordnung zum Verschließen eines Laderaums eines Kraftfahrzeugs mit einer Laderaumabdeckung bekannt. Dabei ist es vorgesehen, dass ein Öffnen und Schließen dieser Laderaumabdeckung mit einer Heckklappenbetätigung des Kraftfahrzeugs gekoppelt ist.
Aus der DE 10 2013 004 537 A1 ist eine Vorrichtung zur Ladungsüberwachung eines Fahrzeugs bekannt. Diese Vorrichtung umfasst eine Erfassungseinheit zur Erfassung einer Größe und/oder eines Gewichts eines Ladeguts. Mit der Erfassungseinheit ist eine Ausgabeeinheit gekoppelt, welche zur Ausgabe einer gewichts- und größenabhängigen optimalen Position des Ladeguts innerhalb eines Laderaums des Fahrzeugs vorgesehen ist.
Aufgabe der vorliegenden Erfindung ist es, eine Unterstützungsvorrichtung für ein Beladen eines Kraftfahrzeugs und ein Verfahren zum Betreiben einer Unterstützungsvorrichtung für ein Beladen eines Kraftfahrzeugs zu schaffen, welche das Beladen eines Kraftfahrzeugs mit einem Ladegut besonders vereinfachen.

Diese Aufgaben werden erfindungsgemäß durch eine Unterstützungsvorrichtung mit den Merkmalen des Patentanspruchs 1 und ein Verfahren mit den Merkmalen des Patentanspruchs 9 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Unterstützungsvorrichtung als vorteilhafte Ausgestaltungen des Verfahrens und umgekehrt anzusehen sind.

Ein erster Aspekt der Erfindung betrifft eine Unterstützungsvorrichtung für ein Beladen eines Kraftfahrzeugs. Erfindungsgemäß umfasst diese Unterstützungsvorrichtung wenigstens eine Erfassungseinrichtung, mittels welcher ein in das Kraftfahrzeug zu ladendes Ladegut erfassbar ist, und eine Türöffnervorrichtung, mittels welcher in Abhängigkeit von dieser Erfassung des Ladeguts mindestens eine Zugangsöffnung zu einem Laderaum des Kraftfahrzeugs freigebbar ist. Bei der Zugangsöffnung kann es sich beispielsweise um eine Öffnung des Kraftfahrzeugs handeln, welche mittels einer Seitentür, einem Kofferraumdeckel und/oder eine Heckklappe freigebbar und verschließbar ist. Bei der Zugangsöffnung kann es sich aber auch um eine Öffnung handeln, welche mittels eines Schiebedachs, eines Verdecks eines als Cabriolet ausgebildeten Kraftfahrzeugs und/oder jeweiliger Fenster des Kraftfahrzeugs freigebbar und verschließbar ist. Die Türöffnervorrichtung kann dann beispielsweise die Seitentür, den Kofferraumdeckel, die Heckklappe, das Verdeck des Cabriolets, das Schiebedach und/oder die Fenster mittels eines elektrischen, pneumatischen und/oder hydraulischen Antriebs aus einer Schließstellung in eine Offenstellung verstellen. Dadurch kann ein Zugang zu dem Laderaum des Kraftfahrzeugs automatisch bei der Erfassung eines zu ladenden Ladeguts freigegeben werden.

Die Unterstützungsvorrichtung kann also automatisch den Laderaum zugänglich machen, falls ermittelt wurde, dass ein Ladegut in den Laderaum geladen werden soll. Dadurch wird das Beladen des Kraftfahrzeugs besonders vereinfacht. Eine Person, welche das Ladegut in das Kraftfahrzeug laden möchte, muss die Freigabe der Zugangsöffnung nicht mehr selbst betätigen. Dadurch ist es beispielsweise nicht mehr notwendig, das Ladegut abzustellen, um für das Beladen einen Türöffner betätigen zu können.

Auch bei besonders sperrigen und/oder schweren Ladegütern kann das Beladen besonders vereinfacht werden. Beispielsweise sind Sensoren unter eine Heckstoßstange eines Kraftfahrzeugs bekannt, welche durch das Bewegen eines Fußes in einen bestimmten Bereich hinter und/oder unter dem Kraftfahrzeug ein Öffnen einer Heckklappe oder eines Kofferraumdeckels bewirken können. Eine solche Bewegung und/oder Platzierung des Fußes kann jedoch bei sperrigen Ladegütern nicht möglich sein oder wenigstens das Halten des Ladegutes besonders erschweren. Aufgrund der Unterstützungsvorrichtung ist diese Bewegung und/oder Platzierung des Fußes dagegen nicht mehr notwendig.

In weiterer vorteilhafter Ausgestaltung der erfindungsgemäßen Unterstützungsvorrichtung ist es vorgesehen, dass die Erfassungseinrichtung als mobile Erfassungseinrichtung ausgebildet ist. Dadurch kann das Ladegut größtenteils unabhängig von einer Position des Kraftfahrzeugs erfasst werden. Beispielsweise kann das Ladegut bereits in einem Gebäude mittels der mobilen Erfassungseinrichtung erfasst werden. Diese Erfassung kann beispielsweise per Funk an das Kraftfahrzeug beziehungsweise die Türöffnervorrichtung übertragen werden. Anschließend kann eine Person das Ladegut bis in den Laderaum des Kraftfahrzeugs laden, ohne dieses vorher nochmals abstellen zu müssen. Aufgrund der Erfassung ist bereits die Zugangsöffnung für das Beladen freigegeben.

Die mobile Erfassungseinrichtung kann beispielsweise als Mobiltelefon ausgebildet sein. Ein Mobiltelefon kann auch als Handy bezeichnet werden. Das Erfassen kann dann beispielsweise mittels einer Kamera des Mobiltelefons erfolgen. Alternativ oder zusätzlich kann die mobile Erfassungseinrichtung auch als Barcodescanner ausgebildet sein oder einen Barcodescanner umfassen. Dann kann durch ein Einscannen eines Barcodes das Ladegut erfasst werden, wobei der Barcode mit einer Datenbank verglichen wird. Diese Datenbank kann in dem Kraftfahrzeug oder der mobilen Erfassungseinrichtung hinterlegt sein, aber auch beispielsweise im Internet oder in einer anderen externen Datenbank. Die Erfassungseinrichtung kann auch eine Eingabeeinrichtung umfassen, welche das manuelle Erfassen des Ladeguts erlaubt.

Die Erfassungseinrichtung kann beispielsweise auch als 3D-Kamera und/oder 3D-Scanner ausgebildet sein. Auch die 3D-Kamera und/oder der 3D-Scanner können dabei tragbar ausgebildet sein.

Alternativ oder zusätzlich kann auch ein Sensor der Erfassungseinrichtung an dem Kraftfahrzeug angeordnet sein. Beispielsweise kann eine Kamera der Erfassungseinrichtung als Sensor an dem Kraftfahrzeug eine sich dem Fahrzeug annähernde Person erfassen und dabei ein Ladegut identifizieren. In Abhängigkeit von dieser Identifikation kann dann ebenfalls die Zugangsöffnung zu dem Laderaum des Kraftfahrzeugs freigegeben werden. Mittels einer Bilderkennungssoftware können dabei auch Personen identifiziert werden, für welche in der Unterstützungsvorrichtung eine jeweilige Zugangserlaubnis zu dem Laderaum gespeichert sind. Die wenigstens eine Zugangsöffnung wird dann nur für zugangsberechtigte Personen freigegeben.

In weiterer vorteilhafter Ausgestaltung der erfindungsgemäßen Unterstützungsvorrichtung ist es vorgesehen, dass mittels der Erfassungseinrichtung eine Abmessung des Ladeguts und/oder ein Gewicht des Ladeguts erfassbar ist, wobei in Abhängigkeit von der erfassten Abmessung und/oder dem erfassten Gewicht die mindestens eine Zugangsöffnung des Laderaums mittels einer Auswahleinrichtung der Unterstützungsvorrichtung aus einer Vielzahl von Zugangsöffnungen des Kraftfahrzeugs zum Freigeben auswählbar ist. Bei dieser Auswahl kann beispielsweise berücksichtigt werden, ob das Ladegut überhaupt durch eine bestimmte Zugangsöffnung passt. Dabei kann ebenfalls berücksichtigt werden, durch welche Zugangsöffnung das Ladegut aufgrund seiner Abmessung am besten geladen werden kann.

Das Gewicht des Ladeguts kann ebenfalls bei der Auswahl der Zugangsöffnung berücksichtigt werden. Beispielsweise ist es schwieriger, ein besonders schweres Ladegut durch eine besonders hoch gelegene Zugangsöffnung in den Laderaum zu laden. Bei besonders schweren Ladegütern kann deswegen eine besonders niedrige Zugangsöffnung ausgewählt werden.

Bei der Auswahl kann ebenfalls berücksichtigt werden, dass einige der Zugangsöffnungen durch eine Umgebung des Kraftfahrzeugs blockiert sein können. Auch hierbei kann die Größe des Ladeguts berücksichtigt werden. Die Umgebung des Kraftfahrzeugs kann dabei durch einen zusätzlichen Sensor in der Erfassungseinrichtung erfasst werden. Dieser Sensor kann aber auch der gleiche Sensor sein, mittels welchem das Ladegut erfasst wird. Ein Beispiel hierfür ist erneut die 3D-Kamera.

In weiterer vorteilhafter Ausgestaltung der Unterstützungsvorrichtung ist es vorgesehen, dass mittels einer Auswerteeinrichtung der Unterstützungsvorrichtung in Abhängigkeit von der erfassten Abmessung und/oder dem erfassten Gewicht des Ladeguts ein Ladeort für das Ladegut bestimmbar ist und die mindestens eine Zugangsöffnung in Abhängigkeit von diesem bestimmten Ladeort mittels der Auswahleinrichtung aus der Vielzahl von Zugangsöffnungen des Kraftfahrzeugs zum Freigeben auswählbar ist. Die Auswerteinrichtung kann dabei Teil der Auswahleinrichtung sein oder auch der Auswahleinrichtung entsprechen. So kann beispielsweise die nächstgelegene Zugangsöffnung zu dem vorgesehenen Ladeort für die Freigabe ausgewählt werden. Insgesamt kann so die Zugangsöffnung ausgewählt werden, mittels welcher das Beladen des Kraftfahrzeugs mit dem Ladegut besonders einfach ist.

Der Ladeort kann in dem Laderaum beispielsweise mittels einer Anzeigevorrichtung angezeigt werden. Dafür können beispielsweise jeweilige Lichtquellen in einem Boden des Laderaums angeordnet sein. Alternativ oder zusätzlich kann beispielsweise eine Art von Beamer den vorgesehenen Ladeort in dem Laderaum anzeigen. Alternativ oder zusätzlich kann der Ladeort auch beispielsweise auf einem Display angezeigt werden, wobei dieses Display vorzugsweise an der mobilen Erfassungseinrichtung angeordnet ist. Dann kann ein Nutzer den geplanten Ladeort bereits bei dem Erfassen des Ladeguts angezeigt bekommen. In diesem Fall ist auch eine manuelle Modifikation des geplanten Ladeorts leicht möglich.

Durch das Freigeben einer bestimmten Zugangsöffnung wird der Person, welche das Ladegut in das Kraftfahrzeug lädt, in intuitiver Art und Weise angezeigt, an welcher Zugangsöffnung das Ladegut am einfachsten in das Kraftfahrzeug zu laden ist. Gleichzeitig wird der Person so auch wenigstens teilweise signalisiert, wo in dem Kraftfahrzeug das Ladegut am besten verstaut werden kann.

In weiterer vorteilhafter Ausgestaltung der erfindungsgemäßen Unterstützungsvorrichtung ist es vorgesehen, dass mittels der Unterstützungsvorrichtung in Abhängigkeit von der Erfassung des Ladeguts, der erfassten Abmessung des Ladeguts, dem erfassten Gewicht des Ladeguts und/oder dem bestimmten Ladeort mittels einer Verstelleinrichtung mindestens ein bewegliches Element des Laderaums, insbesondere ein Sitz, ein Schiebedach, eine Kopfstütze und/oder ein Rollo, zur Vorbereitung auf das Beladen des Laderaums mit Ladegut automatisch verstellbar ist. Bei dem beweglichen Element des Laderaums handelt es sich also um eine Art Laderaumausstattung und/oder Innenraumausstattung. Dadurch kann der Laderaum bereits vor einem Beladen automatisch an das Ladegut für eine besonders vorteilhafte Verstauung angepasst werden. Selbstverständlich können mittels der Verstelleinrichtung auch mehrere bewegliche Elemente verstellt werden, beispielsweise werden zunächst die Kopfstütze aller Rücksitze eingefahren und dann die Rücksitze selber umgeklappt. Dafür kann die Verstelleinrichtung mehrere Aktuatoren umfassen.

In weiterer vorteilhafter Ausgestaltung der erfindungsgemäßen Unterstützungsvorrichtung ist es vorgesehen, dass die Unterstützungsvorrichtung eine Sensoreinrichtung umfasst, mittels welcher erfassbar ist, ob das Ladegut aus dem Laderaum des Kraftfahrzeugs entnommen worden ist, wobei in Abhängigkeit von dieser Erfassung das bewegliche Element des Laderaums mittels der Verstelleinrichtung in eine Ausgangslage automatisch verstellbar ist. Wurden beispielsweise jeweilige Sitzlehnen in einem Innenraum des Kraftfahrzeugs für ein Beladen mit einem Ladegut automatisch nach vorne geklappt, werden diese auch automatisch nach einem Entnehmen des Ladeguts wieder zurückgeklappt. Dadurch ist es beispielsweise nicht mehr notwendig, bei einem Kraftfahrzeug, dessen Innenraum mittels der Verstelleinrichtung für einen Transport von Ladegut optimiert wurde, nach dem Beendigen dieses Transports manuell wieder einen Zustand herzustellen, welcher für den Transport von Personen optimiert ist.

In weiterer vorteilhafter Ausgestaltung der erfindungsgemäßen Unterstützungsvorrichtung ist es vorgesehen, dass die Unterstützungsvorrichtung eine Sensoreinrichtung zum Erfassen eines Abstands des Ladeguts vom Kraftfahrzeug umfasst, wobei in Abhängigkeit von dieser Erfassung die mindestens eine Zugangsöffnung zu dem Laderaum des Kraftfahrzeugs mittels der Türöffnervorrichtung des Kraftfahrzeugs freigebbar ist. Insbesondere wird die Zugangsöffnung erst freigegeben, wenn das Ladegut einen Mindestabstand zu dem Kraftfahrzeug unterschritten hat. Dadurch wird verhindert, dass der Laderaum beziehungsweise die Zugangsöffnung freigegeben wird, während sich noch keine für den Zugang zu dem Kraftfahrzeug autorisierte Person in Sichtreichweite befindet. Dadurch kann verhindert werden, dass unbefugte Personen Zugang zu dem Laderaum des Kraftfahrzeugs erlangen. Außerdem ist so der Laderaum besonders lange vor Umwelteinflüssen wie beispielsweise Regen durch die noch verschlossenen Zugangsöffnungen geschützt. Die Zugangsöffnung kann also erst kurz bevor eine Person mit dem Ladegut an dem Kraftfahrzeug ankommt freigegeben werden.

In weiterer vorteilhafter Ausgestaltung der erfindungsgemäßen Unterstützungsvorrichtung ist es vorgesehen, dass die Unterstützungsvorrichtung eine Sensoreinrichtung umfasst, mittels welcher erfassbar ist, ob ein Beladen des Kraftfahrzeugs mit dem Ladegut beendet ist, wobei in Abhängigkeit von dieser Erfassung die mindestens eine Zugangsöffnung zu dem Laderaum des Kraftfahrzeugs mittels der Türöffnervorrichtung des Kraftfahrzeugs verschließbar ist. Diese Sensoreinrichtung kann beispielsweise als Lichtschranke in der Zugangsöffnung ausgebildet sein. Alternativ kann beispielsweise auch eine Kamera genutzt werden, mittels welcher das Ladegut erfasst wird. Dabei wird vorzugsweise erfasst, dass sich sowohl das Ladegut, als auch eine Person, welche das Ladegut in das Kraftfahrzeug lädt, nicht mehr in der Zugangsöffnung befinden. So muss die Zugangsöffnung nicht mehr manuell verschlossen werden. Stattdessen wird die Zugangsöffnung nach dem Beenden des Ladens automatisch wieder verschlossen, wodurch das Laden besonders komfortabel abzuschließen ist.

Ein zweiter Aspekt der Erfindung betrifft ein Verfahren zum Betreiben einer Unterstützungsvorrichtung für ein Beladen eines Kraftfahrzeugs. Die Unterstützungsvorrichtung umfasst wenigstens eine Erfassungseinrichtung, mittels welcher ein in das Kraftfahrzeug zu ladendes Ladegut erfasst wird und wenigstens eine Türöffnervorrichtung, mittels welcher in Abhängigkeit von dieser Erfassung des Ladeguts mindestens eine Zugangsöffnung zu einem Laderaum des Kraftfahrzeugs freigegeben wird.

Mittels des Verfahrens gemäß dem zweiten Erfindungsaspekt kann die Unterstützungsvorrichtung gemäß dem ersten Erfindungsaspekt betrieben werden. Die sich aus der Verwendung der Unterstützungsvorrichtung gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

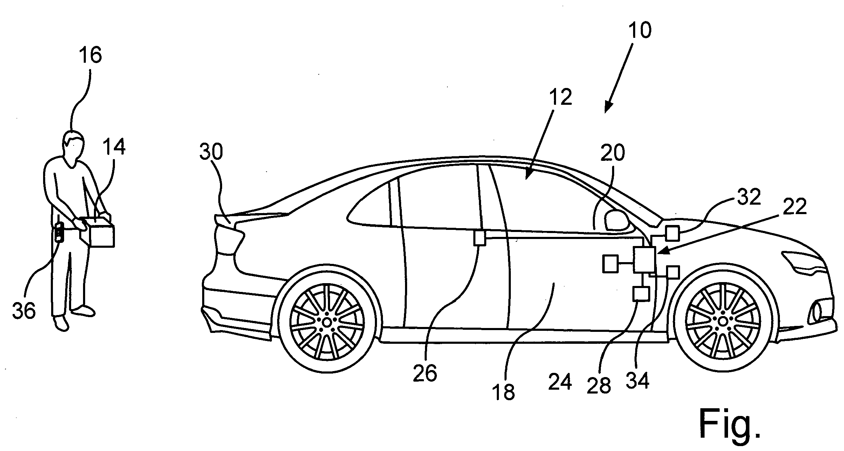

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die einzige Fig. zeigt in einer schematischen Seitenansicht ein Kraftfahrzeug mit einer Unterstützungsvorrichtung für ein Beladen dieses Kraftfahrzeugs.

Die Fig. zeigt in einer schematischen Seitenansicht ein Kraftfahrzeug 10, in dessen Laderaum 12 ein Ladegut 14 geladen werden soll. Der Laderaum 12 entspricht dabei beispielsweise dem Innenraum des Kraftfahrzeugs 10. Alternativ kann der Laderaum 12 auch ein Raum in einem Kofferraum des Kraftfahrzeugs 10 sein oder beispielsweise ein spezieller Laderaum in einem Unterboden eines Reisebusses.

Wie in der Fig. zu erkennen ist, wird das Ladegut 14 von einer Person 16 mit beiden Händen getragen. Das heißt, um das Ladegut 14 in den Laderaum 12 laden zu können, müsste die Person 16 eine Zugangsöffnung 18 zu dem Laderaum 12 freigeben, indem sie zunächst das Ladegut 14 abstellt und dann beispielsweise eine Seitentüre 20 des Kraftfahrzeugs 10 manuell öffnet. Ein solches Beladen des Kraftfahrzeugs 10 ist langwierig und umständlich. Außerdem kann das Ladegut 14 durch das Abstellen verschmutzt werden. Allerdings verfügt das Kraftfahrzeug 10 aus diesem Grund über eine Unterstützungsvorrichtung 22 für das Beladen des Kraftfahrzeugs 10 mit dem Ladegut 14. Diese Unterstützungsvorrichtung 22 umfasst eine Erfassungseinrichtung 24, mittels welcher das in das Kraftfahrzeug 10 zu ladende Ladegut 14 erfassbar ist. Außerdem umfasst die Unterstützungsvorrichtung 22 eine Türöffnervorrichtung 26, mittels welcher in Abhängigkeit von der Erfassung des Ladeguts 14 mindestens eine Zugangsöffnung 18 zu dem Laderaum 12 des Kraftfahrzeugs 10 freigebbar ist. In dem gezeigten Beispiel wird beispielsweise die Seitentür 20 automatisch für das Beladen mit dem Ladegut 14 geöffnet.

Dadurch muss die Person 16 das Ladegut 14 nicht mehr für das Beladen in das Kraftfahrzeug 10 abstellen. Stattdessen wird eine Zugangsöffnung 18 zu dem Kraftfahrzeug 10 beziehungsweise dem Laderaum 12 automatisch freigegeben.

Die Erfassungseinrichtung 24 kann beispielsweise eine Kamera umfassen. Mittels dieser Kamera kann das Ladegut 14 selbst erfasst werden, aber auch zusätzlich dessen Abmessung. Die Erfassungseinrichtung 24 kann auch dazu ausgebildet sein, ein Gewicht des Ladeguts 14 zu erfassen. In Abhängigkeit von den erfassten Abmessungen und/oder dem erfassten Gewicht des Ladeguts 14 können mittels einer Auswahleinrichtung 28 der Unterstützungsvorrichtung 22 bestimmt werden, welche von einer Vielzahl von Zugangsöffnungen 18 des Kraftfahrzeugs 10 am besten für das Beladen mit dem Ladegut 14 geeignet sind. Beispielsweise könnte das Ladegut 14 eine Abmessung aufweisen, welche ein Beladen durch die Seitentür 20 in das Kraftfahrzeug 10 zulässt, aber nicht durch den Kofferraumdeckel 30. Zusätzlich kann mittels der Erfassung der Abmessung des Ladeguts 14 auch mittels einer Auswerteinrichtung 34 bestimmt werden, wo das Ladegut 14 am günstigsten in dem Laderaum 12 verstaut wird. Auch in Abhängigkeit von diesem geplanten Verstauungsort kann die Zugangsöffnung 18 mittels der Auswahleinrichtung 28 ausgewählt werden.

Dieser bestimmte Ladeort innerhalb des Laderaums 12 kann der Person 16 beispielsweise optisch mittels beispielsweise jeweiliger Lampen in dem Laderaum 12 angezeigt werden. Außerdem erhält die Person 16 bereits einen Anhaltspunkt dafür, wo das Ladegut 14 am günstigsten in dem Laderaum 12 verstaubar ist, durch die Zugangsöffnung 18, welche für das Beladen freigegeben wird.

Zusätzlich kann die Unterstützungsvorrichtung 22 auch eine Verstelleinrichtung 32 umfassen, mittels welcher in Abhängigkeit von der Erfassung des Ladeguts 14 jeweilige verstellbare Elemente in dem Laderaum 12 an das Ladegut 14 angepasst werden können. Beispielsweise können jeweilige Rückenlehnen von Sitzen in dem Innenraum des Kraftfahrzeugs 10 für ein Verstauen des Ladeguts 14 automatisch umgeklappt werden.

Nach dem Entladen des Ladeguts 14 aus dem Laderaum 12 können jeweilige verstellbare Elemente automatisch mittels der Verstelleinrichtung 32 wieder in eine Ausgangsstellung zurückbewegt werden. Diese Ausgangsstellung kann beispielsweise eine Stellung sein, welche die beweglichen Elemente vor deren automatischen Verstellung zur Aufnahme des Ladeguts 14 eingenommen haben. Dadurch müssen diese verstellbaren Elemente nicht mehr manuell in eine Ausgangsstellung zurückbewegt werden. Das Kraftfahrzeug 10 wird so beispielsweise nach dem Beenden des Transports des Ladeguts 14 wieder automatisch zur besonders komfortablen Aufnahme von Passagieren konfiguriert.

Die Erfassungseinrichtung 24 kann auch dazu ausgebildet sein, zu erfassen, ob das Laden des Ladeguts 14 in den Laderaum 12 beendet wurde. Insbesondere kann dafür erfasst werden, ob die Zugangsöffnung 18 wieder von dem Ladegut 14 und/oder der Person 16 freigegeben ist und/oder ob das Ladegut 14 in dem Laderaum 12 abgeladen wurde, insbesondere an einem vorher mittels der Auswerteinrichtung 34 bestimmten Ladeort. Dann können jeweilige Schließelemente der Zugangsöffnung 18 wieder automatisch verschlossen werden. In dem in der Fig. gezeigten Beispiel wird beispielsweise also wieder die Seitentür 20 verschlossen, nachdem das Ladegut 14 fertig in dem Laderaum 12 verstaut wurde. Auch hierdurch ist das Ladegut 14 besonders komfortabel und einfach zu verstauen.

Die Erfassungseinrichtung 24 kann auch ein mobiles Endgerät 36 umfassen. Dieses mobile Endgerät 36 wird in dem gezeigten Beispiel von der Person 16 an ihrem Gürtel mitgeführt. Beispielsweise kann es sich um ein Mobiltelefon handeln. Mittels dieses Mobiltelefons kann das Ladegut 14 ebenfalls erfasst werden. Beispielsweise kann das Mobiltelefon eine 3D-Kamera umfassen, mittels welcher jeweilige Abmessungen des Ladeguts 14 bereits in einem Gebäude erfasst werden, bevor die Person 16 das Ladegut 14 zum Beladen aufnimmt. Alternativ oder zusätzlich kann mittels des mobilen Endgeräts 36 beispielsweise ein Barcode des Ladeguts 14 eingelesen werden. Dadurch kann das Ladegut 14 erfasst werden, indem jeweilige Informationen, wie beispielsweise Abmessungen und Gewicht, aus einer Datenbank anhand des erfassten Barcodes abgerufen werden. Diese Informationen stehen dann der Unterstützungsvorrichtung 22 zum automatischen Freigeben der Zugangsöffnung 18, der Auswahl eines optimalen Ladeorts und/oder zum Verstellen der beweglichen Elemente in dem Laderaum 12 zur Verfügung. Die aus der Datenbank abgerufenen Informationen können besonders präzise sein.

Die Erfassungseinrichtung 24 kann beispielsweise auch eine an dem Kraftfahrzeug 10 angeordnete 3D-Kamera als Sensor umfassen. Diese 3D-Kamera ist auch dazu geeignet, die Abmessungen des Ladeguts 14 zu erfassen und/oder ob das Ladegut 14 vollständig in den Laderaum 12 geladen wurde.

Mittels der Erfassungseinrichtung 24 kann auch ein Abstand des Ladeguts 14 von dem Kraftfahrzeug 10 bestimmt werden. Dazu wird beispielsweise erneut das Ladegut 14 und/oder die Person 16 mittels der 3D-Kamera erfasst und ein Abstand zu dem Kraftfahrzeug 10 berechnet. Alternativ kann auch beispielsweise ein Abstand des mobilen Endgeräts 36 und/oder eines Autoschlüssels des Kraftfahrzeugs 10 erfasst werden. Der Autoschlüssel ist in der Fig. nicht gezeigt. Beispielsweise kann dieser von der Person 16 in ihrer Hosentasche getragen werden. Dazu kann beispielsweise das mobile Endgerät 36 und/oder der Autoschlüssel ein Funksignal an das Kraftfahrzeug 10 beziehungsweise die Erfassungseinrichtung 24 senden. Die Zugangsöffnung 18 wird dann in Abhängigkeit von diesem erfassten Abstand freigegeben. Insbesondere kann die Zugangsöffnung 18 erst freigegeben werden, wenn das Ladegut 14 einen bestimmten Mindestabstand zu dem Kraftfahrzeug 10 unterschritten hat. Dadurch wird vermieden, dass die Zugangsöffnung 18 zu dem Laderaum 12 freigegeben wird, bevor die Person 16 diese Zugangsöffnung 18 überwachen kann. Damit kann der Laderaum 12 vor einem unbefugten Zugriff Dritter geschützt werden. Dabei kann es auch vorgesehen sein, dass mittels des mobilen Endgeräts 36 und/oder des Autoschlüssels eine Autorisierung für den Zugang zu dem Laderaum 12 automatisch überprüft wird. Dazu kann beispielsweise eine Identifikationsnummer von dem mobilen Endgerät 36 an die Erfassungseinrichtung 24 beziehungsweise das Kraftfahrzeug 10 und/oder die Unterstützungsvorrichtung 22 übermittelt werden.

Weiterhin kann mittels der Erfassungseinrichtung 24 erfasst werden, ob jeweilige Zugangsöffnungen 18 des Kraftfahrzeugs 10 beziehungsweise des Laderaums 12 durch eine Umgebung des Kraftfahrzeugs 10 wenigstens für das Beladen mit dem Ladegut 14 blockiert sind. Auch diese Erfassung kann dann bei dem Freigeben und/oder der Auswahl der Zugangsöffnung 18 für das Beladen berücksichtigt werden.

Fahrzeuge aller Art haben, aufgrund von Design und Packagenotwendigkeiten, unterschiedlich gestaltete und teilweise stark im Fahrzeug verteilte Verstaumöglichkeiten und aufgrund von Sonderausstattung teilweise selbst bei ein und demselben Derivat stark unterschiedlich gestaltete Laderäume 12. Je nach Fahrzeug und des zu transportierenden Ladeguts 14 ist das korrekte Verstauen deswegen eine Herausforderung.

Mittels der Unterstützungsvorrichtung 22 bereitet sich das Kraftfahrzeug 10 automatisch so vor, dass ein Einpacker das zu transportierende Ladegut 14 nur noch in den Laderaum 12 einlegen muss. Dabei kann die Unterstützungsvorrichtung 22 dem Packer auch zusätzliche Informationen bezüglich einer Reihenfolge bei mehreren zu ladenden Ladegütern 14 geben. Jeweilige bewegliche Elemente wie beispielsweise Sitze, Schiebedächer, Kopfstützen, Rollos, und/oder Netze sind bereits mittels der Verstelleinrichtung 32 in eine Position verstellt, welche das Beladen besonders vereinfacht. Neben einer solchen Fahrzeugvorbereitung innen sind auch jeweilige Zugangsöffnungen 18 bedarfsgerecht bereits für das Beladen geöffnet. Es müssen also nicht mehr weitere Öffnungsprozeduren wie beispielsweise das Betätigen eines Türgriffs und/oder eines Fußzeichen unterhalb eines Stoßfängers vorgenommen werden. Die Unterstützungsvorrichtung 22 reagiert automatisch auf eine Annäherung an das Kraftfahrzeug 10. Dadurch ist ein schnelles, effizientes Beladen ohne eine Notwendigkeit von einem Absetzen unhandlicher Güter möglich. Das Kraftfahrzeug 10 muss nicht mehr manuell für einen Transport vorbereitet werden und es sind keine umständlichen Öffnungsprozeduren von jeweiligen Türen und Klappen notwendig. Bei schlechter Witterung, Dunkelheit, in gefährlichen Situationen und auch bei schweren Gegenständen ist ein schnellstmögliches Verstauen möglich. Dabei kann die jeweilige Verstauposition von Ladegütern so optimiert werden, dass der Laderaum 12 besonders viel Ladegut aufnehmen kann.

## Patentansprüche

1. Unterstützungsvorrichtung (22) für ein Beladen eines Kraftfahrzeugs (10), mit wenigstens einer Erfassungseinrichtung (24), mittels welcher ein in das Kraftfahrzeug (10) zu ladendes Ladegut (14) erfassbar ist, und mit einer Türöffnervorrichtung (26), mittels welcher in Abhängigkeit von dieser Erfassung des Ladeguts (14) mindestens eine Zugangsöffnung (18) zu einem Laderaum (12) des Kraftfahrzeugs (10) freigebbar ist,
**dadurch gekennzeichnet, dass**
die Unterstützungsvorrichtung (22) eine Sensoreinrichtung umfasst, mittels welcher erfassbar ist, ob ein Beladen des Kraftfahrzeugs (10) mit dem Ladegut (12) beendet ist, wobei sie in Abhängigkeit von dieser Erfassung die mindestens eine Zugangsöffnung (18) zu dem Laderaum (12) des Kraftfahrzeugs (10) mittels der Türöffnervorrichtung (26) des Kraftfahrzeugs (10) automatisch verschließt.

2. Unterstützungsvorrichtung (22) nach Anspruch 1,
**dadurch gekennzeichnet, dass**
die Erfassungseinrichtung (24) als mobile Erfassungseinrichtung (36) ausgebildet ist.

3. Unterstützungsvorrichtung (22) nach einem der Ansprüche 1 oder 2, **dadurch gekennzeichnet, dass**
mittels der Erfassungseinrichtung (24) eine Abmessung des Ladeguts (14) und/oder ein Gewicht des Ladeguts (14) erfassbar ist, wobei in Abhängigkeit von der erfassten Abmessung und/oder dem erfassten Gewicht die mindestens eine Zugangsöffnung (18) des Laderaums (12) mittels einer Auswahleinrichtung (28) der Unterstützungsvorrichtung (22) aus einer Vielzahl von Zugangsöffnungen (18) des Kraftfahrzeugs (10) zum Freigeben auswählbar ist.

4. Unterstützungsvorrichtung (22) nach Anspruch 3,
**dadurch gekennzeichnet, dass**
mittels der Auswerteinrichtung (34) der Unterstützungsvorrichtung (22) in Abhängigkeit von der erfassten Abmessung und/oder dem erfassten Gewicht des Ladeguts (14) ein Ladeort für das Ladegut (14) bestimmbar ist und die mindestens eine Zugangsöffnung (18) in Abhängigkeit von diesem bestimmten Ladeort mittels der Auswahleinrichtung (28) aus der Vielzahl von Zugangsöffnungen (18) des Kraftfahrzeugs (10) zum Freigeben auswählbar ist.

5. Unterstützungsvorrichtung nach einem der vorhergehenden Ansprüche, **dadurch gekennzeichnet, dass**
mittels der Unterstützungsvorrichtung (22) in Abhängigkeit von der Erfassung des Ladeguts (14), der erfassten Abmessung des Ladeguts (14), dem erfassten Gewicht des Ladeguts (14) und/oder dem bestimmten Ladeort mittels einer Verstelleinrichtung (32) mindestens ein bewegliches Element des Laderaums (12), insbesondere ein Sitz, ein Schiebedach, eine Kopfstütze und/oder ein Rollo, zur Vorbereitung auf das Beladen des Laderaums (12) mit Ladegut (14) automatisch verstellbar ist.

6. Unterstützungsvorrichtung (22) nach Anspruch 5,
**dadurch gekennzeichnet, dass**
die Unterstützungsvorrichtung (22) eine Sensoreinrichtung umfasst, mittels welcher erfassbar ist, ob das Ladegut (14) aus dem Laderaum (12) des Kraftfahrzeugs (10) entnommen worden ist, wobei in Abhängigkeit von dieser Erfassung das bewegliche Element des Laderaums (12) mittels der Verstelleinrichtung (32) in eine Ausgangsstellung automatisch verstellbar ist.

7. Unterstützungsvorrichtung (22) nach einem der vorhergehenden Ansprüche,
**dadurch gekennzeichnet, dass**
die Unterstützungsvorrichtung (22) eine Sensoreinrichtung zum Erfassen eines Abstands des Ladeguts (14) vom Kraftfahrzeug (10) umfasst, wobei in Abhängigkeit von dieser Erfassung die mindestens eine Zugangsöffnung (18) zu dem Laderaum (12) des Kraftfahrzeugs (10) mittels der Türöffnervorrichtung (26) des Kraftfahrzeugs (10) freigebbar ist.

8. Verfahren zum Betreiben einer Unterstützungsvorrichtung (22) für ein Beladen eines Kraftfahrzeugs (10), mit wenigstens einer Erfassungseinrichtung (24), mittels welcher ein in das Kraftfahrzeug (10) zu ladendes Ladegut (14) erfasst wird, und mit einer Türöffnervorrichtung (26), mittels welcher in Abhängigkeit von dieser Erfassung des Ladeguts (14) mindestens eine Zugangsöffnung (18) zu einem Laderaum (12) des Kraftfahrzeugs (10) freigegeben wird,
**dadurch gekennzeichnet, dass**
erfasst wird, ob ein Beladen des Kraftfahrzeugs (10) mit dem Ladegut (12) beendet ist, wobei in Abhängigkeit von dieser Erfassung die mindestens eine Zugangsöffnung (18) zu dem Laderaum (12) des Kraftfahrzeugs (10) automatisch verschlossen wird.

## Claims

1. Assistance device (22) for loading a motor vehicle (10), comprising at least one detection device (24), by means of which an item (14) that is to be loaded into the motor vehicle (10) can be detected, and a door opening device (26) which allows at least one access opening (18) to a storage compartment (12) in the motor vehicle (10) to be opened in accordance with said detection of the item (14),
**characterised in that**
the assistance device (22) comprises a sensor device, by means of which it is possible to detect, whether any loading of the motor vehicle (10) with the item (12) has finished, whereby in accordance with said detection it automatically locks the at least one access opening (18) to the storage compartment (12) in the motor vehicle (10) by means of the door opening device (26) in the motor vehicle (10).

2. Assistance device (22) according to claim 1,
**characterised in that**
the detection device (24) is configured as mobile detection device (36).

3. Assistance device (22) according to any one of claims 1 or 2,
**characterised in that**
a dimension of the item (14) and/or a weight of the item (14) can be detected by means of the detection device (24), whereby, in accordance with the detected dimension and/or the detected weight, the at least one access opening (18) of the storage compartment (12) can be selected for opening from a plurality of access openings (18) in the motor vehicle (10) by means of a selection device (28) of the assistance device (22).

4. Assistance device (22) according to claim 3,
**characterised in that**
a loading place for the item (14) can be determined by means of the evaluation unit (34) of the assistance device (22) in accordance with the detected dimension and/or the detected weight of the item (14) and, in accordance with said determined loading place, the at least one access opening (18) can be selected for opening from the plurality of access openings (18) in the motor vehicle (10) by means of the selection device (28).

5. Assistance device according to any one of the preceding claims,
**characterised in that**
at least one movable element of the storage compartment (12), more particularly a seat, a sunroof, a head restraint and/or a roller blind, can be repositioned automatically by means of the assistance device (22) in accordance with the detection of the item (14), the detected dimension of the item (14), the detected weight of the item (14) and/or the determined loading place by means of a repositioning device (32) in preparation for the loading of the storage compartment (12) with the item (14).

6. Assistance device (22) according to claim 5,
**characterised in that**
the assistance device (22) comprises a sensor device, by means of which it is possible to detect, whether the item (14) has been removed from the storage compartment (12) in the motor vehicle (10), whereby in accordance with said detection the movable element of the storage compartment (12) can be repositioned automatically into a home position by means of the repositioning device (32).

7. Assistance device (22) according to any one of the preceding claims,
**characterised in that**
the assistance device (22) comprises a sensor device for detecting a distance of the item (14) from the motor vehicle (10), whereby, in accordance with said detection, the at least one access opening (18) to the storage compartment (12) in the motor vehicle (10) can be opened by means of the door opening device (26) in the motor vehicle (10).

8. Method of operating an assistance device (22) for loading a motor vehicle (10), comprising at least one detection device (24), by means of which an item (14) that is to be loaded into the motor vehicle (10) is detected and a door opening device (26) which allows at least one access opening (18) to a storage compartment (12) in the motor vehicle (10) to be opened in accordance with said detection of the item (14),
**characterised in that**
it is detected whether any loading of the motor vehicle (10) with the load (12) has finished, whereby in accordance with said detection the at least one access opening (18) to the storage compartment (12) in the motor vehicle (10) is locked automatically.

## Revendications

1. Dispositif d'assistance (22) pour un chargement d'un véhicule automobile (10), avec au moins un système de détection (24), au moyen duquel un produit de chargement (14) à charger dans le véhicule automobile (10) peut être détecté, et avec un dispositif ouvreur de portière (26), au moyen duquel en fonction de ladite détection du produit de chargement (14), au moins une ouverture d'accès (18) menant à un espace de chargement (12) du véhicule automobile (10) peut être dégagée,
**caractérisé en ce que**
le dispositif d'assistance (22) comprend un système de capteur, au moyen duquel il peut être détecté si un chargement du véhicule automobile (10) avec le produit de chargement (12) est terminé, dans lequel il ferme automatiquement en fonction de ladite détection l'au moins une ouverture d'accès (18) menant à l'espace de chargement (12) du véhicule automobile (10) au moyen du dispositif ouvreur de portière (26) du véhicule automobile (10).

2. Dispositif d'assistance (22) selon la revendication 1,
**caractérisé en ce que**
le système de détection (24) est réalisé sous la forme d'un système de détection (36) mobile.

3. Dispositif d'assistance (22) selon l'une quelconque des revendications 1 ou 2,
**caractérisé en ce que**
une dimension du produit de chargement (14) et/ou un poids du produit de chargement (14) peuvent être détectés au moyen du système de détection (24), dans lequel en fonction de la dimension détectée et/ou du poids détecté, l'au moins une ouverture d'accès (18) de l'espace de chargement (12) peut être sélectionnée au moyen d'un système de sélection (28) du dispositif d'assistance (22) parmi une pluralité d'ouvertures d'accès (18) du véhicule automobile (10) aux fins du dégagement.

4. Dispositif d'assistance (22) selon la revendication 3,
**caractérisé en ce que**
un emplacement de chargement pour le produit de chargement (14) peut être défini au moyen du système d'évaluation (34) du dispositif d'assistance (22) en fonction de la dimension détectée et/ou du poids détecté du produit de chargement (14), et l'au moins une ouverture d'accès (18) peut être sélectionnée en fonction dudit emplacement de chargement défini au moyen du système de sélection (28) parmi la pluralité d'ouvertures d'accès (18) du véhicule automobile (10) aux fins du dégagement.

5. Dispositif d'assistance selon l'une quelconque des revendications précédentes,
**caractérisé en ce que**
au moins un élément mobile de l'espace de chargement (12), en particulier un siège, un toit coulissant, un appui-tête et/ou un store, servant à la préparation au chargement de l'espace de chargement (12) avec le produit de chargement (14) peut être ajusté automatiquement au moyen du dispositif d'assistance (22) en fonction de la détection du produit de chargement (14), de la dimension détectée du produit de chargement (14), du poids détecté du produit de chargement (14) et/ou de l'emplacement de chargement défini au moyen d'un système d'ajustement (32).

6. Dispositif d'assistance (22) selon la revendication 5,
**caractérisé en ce que**
le dispositif d'assistance (22) comprend un système de capteur, au moyen duquel il peut être détecté si le produit de chargement (14) a été prélevé de l'espace de chargement (12) du véhicule automobile (10), dans lequel en fonction de ladite détection, l'élément mobile de l'espace de chargement (12) peut être ajusté automatiquement au moyen du système d'ajustement (32) dans une position de départ.

7. Dispositif d'assistance (22) selon l'une quelconque des revendications précédentes,
**caractérisé en ce que**
le dispositif d'assistance (22) comprend un système de capteur servant à détecter une distance entre le produit de chargement (14) et le véhicule automobile (10), dans lequel en fonction de ladite détection, l'au moins une ouverture d'accès (18) menant à l'espace de chargement (12) du véhicule automobile (10) peut être dégagée au moyen du dispositif ouvreur de portière (26) du véhicule automobile (10).

8. Procédé servant à faire fonctionner un dispositif d'assistance (22) pour un chargement d'un véhicule automobile (10), avec au moins un système de détection (24), au moyen duquel un produit de chargement (14) à charger dans le véhicule automobile (10) est détecté, et avec un dispositif ouvreur de portière (26), au moyen duquel au moins une ouverture d'accès (18) menant à un espace de chargement (12) du véhicule automobile (10) est dégagée en fonction de ladite détection du produit de chargement (14),
**caractérisé en ce que**
il est détecté si un chargement du véhicule automobile (10) avec le produit de chargement (12) est terminé, dans lequel en fonction de ladite détection, l'au moins une ouverture d'accès (18) menant à l'espace de chargement (12) du véhicule automobile (10) est fermée automatiquement.
